# EUROPÄISCHE PATENTSCHRIFT

(11) **EP 1 107 870 B1**
(45) Veröffentlichungstag und Bekanntmachung des Hinweises auf die Patenterteilung: **23.10.2002**
(21) Anmeldenummer: 99953623.8
(22) Anmeldetag: 27.08.1999
(51) Int. Cl.: B41M 7/00, B41M 3/14, B41M 3/06, B41M 1/12

(54) **VERFAHREN ZUR HERSTELLUNG VON LANGNACHLEUCHTENDEN SICHERHEITSMARKIERUNGEN, SICHERHEITSSCHILDERN UND DERGLEICHEN**
METHOD FOR THE PRODUCTION OF LONG-ENDURING LUMINESCENT SAFETY MARKINGS, SAFETY SIGNS AND THE LIKE
PROCEDE DE FABRICATION DE MARQUAGES DE SECURITE, DE PANNEAUX DE SECURITE ET ANALOGUES A PHOSPHORESCENCE DE LONGUE DUREE

(30) Priorität: 28.08.1998 DE 19839367; 09.10.1998 DE 19846552
(43) Veröffentlichungstag der Anmeldung: 20.06.2001
(73) Patentinhaber: Bischoff GmbH, 76461 Muggensturm (DE)
(72) Erfinder: BISCHOFF, Johannes, D-76461 Muggensturm (DE)
(74) Vertreter: Jakelski, Joachim, Dr.
(86) Internationale Anmeldenummer: DE9902692
(87) Internationale Veröffentlichungsnummer: WO00012322

(56) Entgegenhaltungen:
- EP-A- 0 856 363
- WO-A-93/18233
- DE-A- 2 134 773
- DE-C- 19 600 340

## Beschreibung

Die Erfindung betrifft ein Verfahren zur Herstellung von langnachleuchtenden Sicherheitsmarkierungen, Sicherheitsschildern und dergleichen mit extrem hohen Leuchtdichten, insbesondere für den Offshore-Einsatz, wobei man auf einen mit einer Reflexionsschicht beschichteten Träger mittels Siebdrucktechnik wenigstens eine Schicht von wenigstens einer Sorte von in einem Bindemittel gebundenen langnachleuchtenden Pigmenten (langnachleuchtende Schicht) aufträgt und diese langnachleuchtende Schicht mit wenigstens einer Schutzlackschicht versiegelt.

Derartige Verfahren zur Herstellung von langnachleuchtenden - Sicherheitsmarkierungen, Sicherheitsschildern und dergleichen gehen beispielsweise aus der DE 196 00 340 A1, der WO 97/25212 und der DE 295 08 920 U1 hervor.

Extrem hohe Leuchtdichten erfordern eine große Menge langnachleuchtender Pigmente pro Flächeneinheit. Dies kann nur durch sehr große, fertigungstechnisch sehr schwierig zu handhabende Schichtdicken erreicht werden.

Für den Einsatz im Offshore-Bereich, in der Schiffahrt, in chemischen Anlagen und dergleichen sind besonders hohe Anforderungen an die Haltbarkeit und Widerstandsfähigkeit derartiger Schilder zu stellen.

Aufgabe der Erfindung ist es daher, ein Verfahren zur Herstellung von langnachleuchtenden Sicherheitsmarkierungen, Sicherheitsschildern und dergleichen mit extrem hohen Leuchtdichten der gattungsgemäßen Art derart weiterzubilden, daß sie bei einfacher Herstellung eine sehr große Haltbarkeit und Widerstandsfähigkeit aufweisen und zum Außeneinsatz, auf Bohrinseln, in der Schiffahrt und in chemischen Anlagen geeignet sind. Dabei sollen insbesondere auch große Schichtdicken verarbeitet werden können.

Diese Aufgabe wird bei einem Verfahren zur Herstellung von langnachleuchtenden Sicherheitsmarkierungen, Sicherheitsschildern und dergleichen der eingangs beschriebenen Art erfindungsgemäß dadurch gelöst, daß man gemäß Anspruch 1 sowohl als Bindemittel als auch als Schutzlack denselben Einbrennlack verwendet und daß man die wenigstens eine langnachleuchtende Schicht vor Aufbringen der Schutzlackschicht, zunächst mit einem vorgegebenen Temperatur-Zeit-Profil und daraufhin die Schutzlackschicht mit einem weiteren vorgegebenen Temperatur-Zeit-Profil härtet.

Durch die Verwendung desselben Einbrennlacks sowohl als Bindemittel als auch als Schutzlack und dadurch, daß man einerseits die wenigstens eine langnachleuchtende Schicht andererseits auch die Schutzlackschicht jeweils bei einem Temperatur-Zeit-Profil härtet, werden sowohl die langnachleuchtende Schicht als auch die Schutzlackschicht gewissermaßen eingebrannt, wodurch sich eine besonders große Widerstandsfähigkeit und eine lange Haltbarkeit der so hergestellten Hinweisschilder, Markierungen und dergleichen ergibt. Durch den Einbrennvorgang können auf besonders vorteilhafte Weise auch größere Schichtdicken hergestellt werden, da durch das Einbrennen eine Stabilisierung und Fixierung auch dicker Schichten stattfindet.

Die so hergestellten Schichten sind insbesondere auch für Wasser und/oder Wasserdampf undurchlässig.

Bei einer vorteilhaften Ausführungsform ist dabei vorgesehen, daß man wenigstens zwei langnachleuchtende Schichten aufträgt, nach jedem Auftrag mit einem Temperatur-Zeit-Profil härtet, diese Schichten mit wenigstens einer Schutzlackschicht überdeckt und diese Schutzlackschicht bei einem vorgegebenen Temperatur-Zeit-Profil härtet.

Insbesondere zur Herstellung von langnachleuchtenden Hinweisschildern, die deutsche und europäische Normen erfüllen, ist bei einer vorteilhaften Ausführungsform vorgesehen, daß man vor dem Auftrag der wenigstens einen Schutzlackschicht eine Kontrastfarbschicht auf den Träger aufträgt, wobei wenigstens ein durch die wenigstens eine langnachleuchtende Schicht zu bedruckender Bereich ausgespart wird, und daß man daraufhin die gesamte Fläche mit wenigstens einer Schutzlackschicht bedeckt und diese mit einem vorgegebenen Temperatur-Zeit-Profil härtet.

Zur weiteren Erhöhung der Widerstandsfähigkeit und Haltbarkeit der Hinweisschilder ist vorzugsweise vorgesehen, daß man nach Auftragung sämtlicher Schichten eine die gesamte Fläche überdeckende Schutzlackschicht aufträgt und diese bei einem vorgegebenen Temperatur-Zeit-Profil härtet.

Bei einer vorteilhaften Ausführungsform ist dabei vorgesehen, daß diese Schutzlackschicht Glasperlen enthält. Auf diese Weise wird insbesondere eine sehr hohe Abriebfestigkeit der so hergestellten Hinweisschilder, Markierungen und dergleichen erzielt, da die Glasperlenschicht als letzte aufgetragene und eingebrannte Schicht aufgrund der Härte des Glases eine besonders hohe Widerstandsfähigkeit gegenüber Abrieb gewährleistet. Die langnachleuchtenden Eigenschaften werden dabei nur unwesentlich beeinflußt, da die Glasperlen-Lackschicht maximal 5 % des einfallenden bzw. abgegebenen Lichts absorbiert.

Zur Auftragung der Schutzlackschichten wird vorteilhafterweise ein Sieb mit einem Gewebe zwischen 15 und 140 verwendet.

Für die Auftragung der langnachleuchtenden Schichten wird vorzugsweise ein Gewebe von 9,5 bis 32 verwendet.

Vorzugsweise wird ein Temperatur-Zeit-Profil verwendet, bei dem man zwischen 1 und 60 Minuten bei einer Temperatur von 100° bis 200°C härtet.

Das Mischungsverhältnis von Bindemittel, d.h. Einbrennlack zu Pigment beträgt vorteilhafterweise zwischen 1 : 0,5 und 1 : 2, vorzugsweise zwischen 1 : 1,2 und 1 : 1,5.

Die erfindungsgemäße Aufgabe wird des weiteren auch durch ein Verfahren zur Herstellung von langnachleuchtenden Sicherheitsmarkierungen, Sicherheitsschildern, Sicherheitsleitsystemen, Sicherheitsstreifen und dergleichen, insbesondere für den Außeneinsatz gemäß Anspruch 11 gelöst, wobei man auf einen mit einer vorzugsweise weißen Reflexionsschicht beschichteten Träger mittels Siebdrucktechnik zunächst eine Schutzlackschicht und dann eine Mehrzahl von dünnen Schichten von wenigstens einer Sorte von in einem Einbrennlack in niedriger Konzentration gebundenen langnachleuchtenden Pigmenten aufträgt (langnachleuchtende Schichten) und mit einem vorgegebenen Temperatur-Zeit-Profil härtet, und wobei sowohl als Einbrennlack als auch als Schutzlack derselbe Einbrennlack verwendet wird.

Dabei beträgt das Mischungsverhältnis von Einbrennlack zu Pigment vorteilhafterweise wenigstens 2 : 1, es wird ein Gewebe von 15 Fäden in Kett- und Schußrichtung verwendet. Man härter diese Schichten vorzugsweise 30 Minuten bei 140°.

Erfindungsgemäß ist vorgesehen, daß der als Bindemittel verwendete Einbrennlack auch für die weiße Reflektionsschicht des Trägers sowie für sämtliche Schutzlackschichten verwendet wird. Auf diese Weise ist sichergestellt, daß sämtliche Lacke miteinander kompatibel sind und lediglich nur noch ein Einbrennlack verarbeitet werden muß. Es versteht sich, daß statt identischer Lacke auch Lacke aus einem kompatiblen Lacksystem verwendet werden können.

Weitere Vorteile und Merkmale der Erfindung sind Gegenstand der nachfolgenden Beschreibung sowie der zeichnerischen Darstellung eines durch das erfindungsgemäße Verfahren hergestellten Hinweisschildes.

Die Figur zeigt die Schnittdarstellung eines nach dem erfindungsgemäßen Verfahren hergestellten Hinweisschildes.

Wie in der Figur dargestellt, wird ein beschichteter Träger 10, beispielsweise ein mit einer weißen Reflexionsschicht beschichteter Aluminiumträger auf folgende Weise mit Farbschichten, langnachleuchtenden Schichten und Schutzschichten versehen.

Zunächst wird eine Kontrastfarbe, beispielsweise eine rote, grüne, gelbe oder schwarze Farbe aufgetragen, wobei ein Motivfilm verwendet wird. Dabei werden Piktogramme und dergleichen des eigentlichen Hinweisschildes ausgespart. Über diese Kontrastfarbschicht 20 wird zunächst eine Schutz- und Sperrlackschicht 30 in Form eines Einbrennlacks durch Siebdrucktechnik aufgetragen, wobei ein Gewebe von 77 Fäden in Schuß- und Kettrichtung verwendet wird. Diese Schutzlackschicht 30 wird 30 Minuten bei einer Temperatur von 130°C gehärtet. Es versteht sich, daß der Druckvorgang nicht auf dieses Gewebe festgelegt ist, sondern daß für den Auftrag der Schutzlackschicht auch ein anderes Gewebe verwendet werden kann, welches auf die Zähflüssigkeit und Druckfähigkeit des Schutzlacks angepaßt ist. Beispielsweise können Gewebe von 15 bis 140, vorzugsweise von 48 bis 90 Fäden in Kett- und Schußrichtung vorgesehen sein.

Sodann wird zunächst eine Schicht von wenigstens einer Sorte von in einem Bindemittel gebundenen langnachleuchtenden Pigmenten (langnachleuchtende Schicht 40) aufgetragen. Dabei können unterschiedliche Pigmente in das Bindemittel gemischt werden. Als Pigmente eignen sich sehr vorteilhaft beispielsweise Riedel de Haen 50078 oder 50069 Pigmente oder Nemoto G-300C Pigmente. Das Bindemittel bildet dabei genau der gleiche Einbrennlack, der zuvor als Schutzlack 30 verwendet wurde. Das Mischungsverhältnis von Bindemittel, d.h. Einbrennlack zu Pigment, beträgt zwischen 1 : 0,5 und 1 : 2, vorzugsweise zwischen 1 : 1,2 und 1 : 1,5.

Die langnachleuchtende Schicht wird mit einem Gewebe von 9,5 bis 48, insbesondere mit einem Gewebe von 15 Fäden in Kett- und Schußrichtung aufgetragen und 30 Minuten bei 140°C gehärtet.

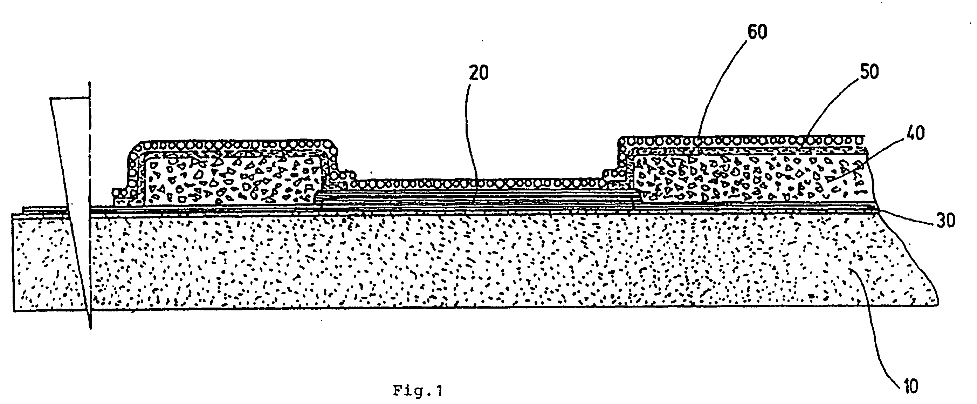

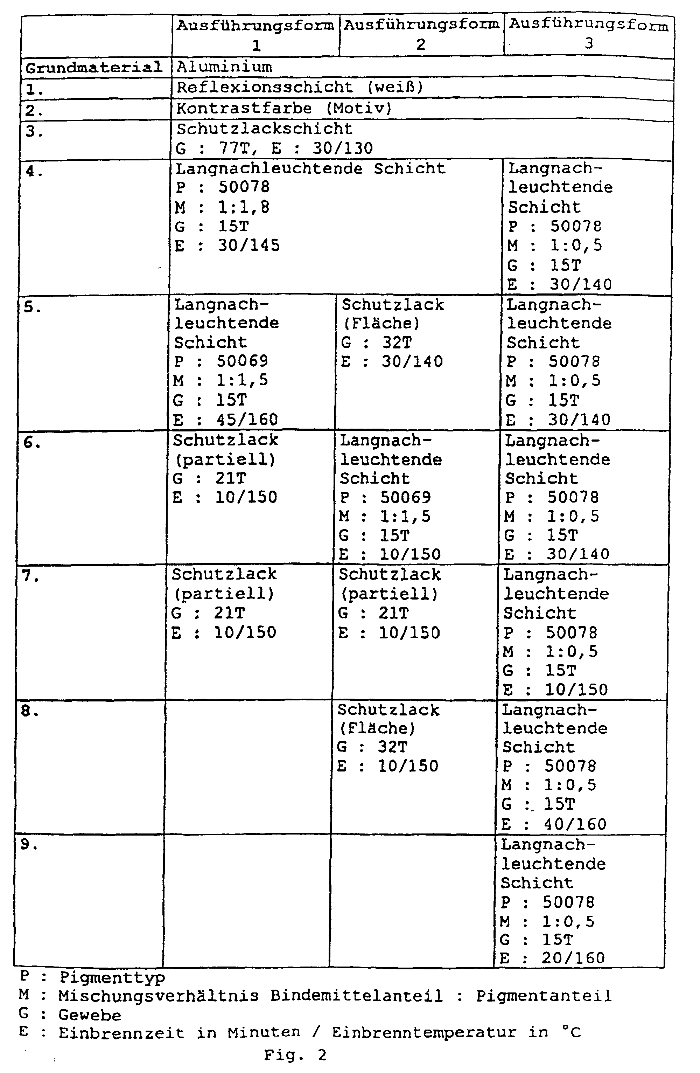

In Fig. 2 sind in Form einer Tabelle verschiedene Ausführungsformen des Verfahrens dargestellt. Wie aus Fig. 2 hervorgeht, können außer dieser langnachleuchtenden Schicht 40 weitere langnachleuchtende Schichten auf die oben beschriebene Weise aufgedruckt und mit einem geeigneten Temperatur-Zeit-Profil gehärtet werden.

Beispielsweise kann direkt auf die erste langnachleuchtende Schicht eine zweite langnachleuchtende Schicht aufgedruckt werden (Ausführungsform 1) oder es kann zunächst ein Schutzlack aufgebracht werden, der die gesamte Fläche überdeckt und erst dann eine weitere langnachleuchtende Schicht (Ausführungsform 2). Diese Ausführungsform 2 hat gegenüber der Ausführungsform 1 insbesondere den großen Vorteil, daß durch die vollflächige Lackschicht Niveauunterschiede zwischen den Stellen, an denen langnachleuchtende Schichten aufgedruckt sind und denen, an denen keine langnachleuchtenden Schichten aufgedruckt sind, ausgeglichen werden. Über die langnachleuchtende Schicht 40 wird dann eine partielle Schutzlackschicht 50 aufgetragen, die im wesentlichen nur die langnachleuchtende Schicht 40 überdeckt. Diese Schutzlackschicht 50 besteht wiederum aus dem Einbrennlack, der auch für die oben beschriebene Schutzlackschicht 30 verwendet wird. Auf diese Schutzlackschicht kann auch verzichtet werden. Die Auftragung erfolgt mittels Siebdruck durch ein Gewebe von 48 bis 100, insbesondere 21 Fäden in Kett- und Schußrichtung. Diese partielle Schutzlackschicht wird 10 Minuten bei 150°C gehärtet beziehungsweise eingebrannt.

Es können daraufhin weitere partielle Schutzlackschichten wie die oben beschriebene aufgetragen und gehärtet werden.

Das gesamte Schild wird schließlich mit einer zweiten Schutzlackschicht 60 überdeckt, welche vorzugsweise eine Mischung aus dem Einbrennlack und Glasperlen ist. Diese Schutzlackschicht 60 wird mit einem Gewebe von 95 bis 100, insbesondere 32 Fäden in Kett- und Schußrichtung aufgetragen. Die Aushärtung erfolgt bei 150°C, welche 10 Minuten auf diese Schutzlackschicht 60 einwirken.

Eine andere Ausführungsform sieht vor, daß eine Mehrzahl (wie aus der in Fig. 2 dargestellten Tabelle hervorgeht) beispielsweise sieben langnachleuchtende Schichten aufgetragen und jeweils mit einem vorgegebenen Temperatur-Zeit-Profil gehärtet werden. In diesem Falle werden Pigmente des Typs 50078 der Firma Riedel de Haen verwendet, das Mischungsverhältnis von Einbrennlack zu Pigment beträgt 1 : 0,5. Es wird ein Siebdruckgewebe mit 15 Fäden in Kett- und Schußrichtung verwendet, das Temperatur-Zeit-Profil der ersten drei Schichten beträgt 30 Minuten bei 140°C, in der vierten Schicht 10 Minuten Dauer bei 150°C, in der fünften Schicht 40 Minuten Dauer bei 160°C und der sechsten Schicht 20 Minuten bei 160°C. Durch das geringe Mischungsverhältnis und die Temperatur-Zeit-Profile zur Einbrennung dieser einzeln aufgetragenen Schutzlackschichten sind einzelne Schutzlackschichten zwischen dem Auftrag dieser langnachleuchtenden Schichten nicht notwendig. Durch die Vielzahl der Schichten wird eine hinreichend große Leuchtdichte erzielt.

Wie in der Figur weiter dargestellt, wird eine Stanzkante bei derartigen Hinweisschildern so angeordnet, daß sie nicht durch langnachleuchtende Schichten 40 ragt.
Die auf die obenbeschriebene Weise hergestellten Schilder weisen eine sehr hohe Leuchtdichte bei einer Haltbarkeit von fünf Jahren und mehr auf. Durch das Härten oder Einbrennen werden die langnachleuchtenden Pigmente in ein Lacksystem eingebettet, welches ein Eindringen von Wasser vollständig verhindert. Solche Schilder zeigen eine sehr hohe Beständigkeit gegen praktisch alle Umwelteinflüsse, insbesondere gegen Abrieb, chemische Einflüsse und Einflüsse, wie sie im Außeneinsatz auftreten können.

## Patentansprüche

1. Verfahren zur Herstellung von langnachleuchtenden Sicherheitsmarkierungen, Sicherheitsschildern, Sicherheitsleitsystemen, Sicherheitsleitstreifen und dergleichen mit extrem hohen Leuchtdichten, insbesondere für den Außeneinsatz, wobei man auf einen mit einer vorzugsweise weißen Reflexionsschicht beschichteten Träger (10) mittels Siebdrucktechnik wenigstens eine Schicht von wenigstens einer Sorte von in einem Bindemittel gebundenen langnachleuchtenden Pigmenten aufträgt (langnachleuchtende Schicht (40)) und diese Schicht mit wenigstens einer Schutzlackschicht (50, 60) versiegelt, und wobei man die wenigstens eine langnachleuchtende Schicht vor Aufbringen der Schutzlackschicht (50, 60) zunächst mit einem vorgegebenen Temperatur-Zeit-Profil und daraufhin die Schutzlackschicht (50, 60) mit einem weiteren vorgegebenen Temperatur-Zeit-Profil härtet, **dadurch gekennzeichnet, daß** man sowohl als Bindemittel als auch als Schutzlack denselben Einbrennlack verwendet.

2. Verfahren nach Anspruch 1, **dadurch gekennzeichnet, daß** man wenigstens zwei langnachleuchtende Schichten (40) aufträgt und nach jedem Auftrag mit einem vorgegebenen Temperatur-Zeit-Profil aushärtet, diese langnachleuchtenden Schichten (40) mit wenigstens einer Schutzlackschicht (50, 60) überdeckt und diese Schutzlackschicht (50, 60) bei einem vorgegebenen Temperatur-Zeit-Profil aushärtet.

3. Verfahren nach Anspruch 1 oder 2, **dadurch gekennzeichnet, daß** man vor dem Auftrag der langnachleuchtenden Schichten (40) eine Kontrastfarbschicht (20) auf den Träger (10) aufträgt, wobei wenigstens ein durch die wenigstens eine langnachleuchtende Schicht (40) zu bedruckende Bereich ausgespart wird, und daß man daraufhin die gesamte Fläche mit wenigstens einer Schutzlackschicht (30) überdeckt und diese mit einem vorgegebenen Temperatur-Zeit-Profil härtet.

4. Verfahren nach Anspruch 1 oder 2, **dadurch gekennzeichnet, daß** man eine langnachleuchtende Schicht aufträgt, mit einem vorgegebenen Temperatur-Zeit-Profil härtet, mit einer Schutzlackschicht überdeckt und diese Schutzlackschicht bei einem vorgegebenen Temperatur-Zeit-Profil härtet und daß man daraufhin eine weitere langnachleuchtende Schicht aufträgt, mit einem vorgegebenen Temperatur-Zeit-Profil härtet, mit einer Schutzlackschicht überdeckt und diese Schutzlackschicht bei einem vorgegebenen Temperatur-Zeit-Profil härtet.

5. Verfahren nach einem der voranstehenden Ansprüche, **dadurch gekennzeichnet, daß** man nach dem Auftrag sämtlicher Schichten eine die gesamte Fläche überdeckende Schutzlackschicht (60) aufträgt und diese bei einem vorgegebenen Temperatur-Zeit-Profil härtet.

6. Verfahren nach Anspruch 5, **dadurch gekennzeichnet, daß** die Schutzlackschicht (60) Glasperlen enthält.

7. Verfahren nach einem der voranstehenden Ansprüche, **dadurch gekennzeichnet, daß** man für den Auftrag der Schutzlackschichten (30, 50, 60) ein Sieb mit einem Gewebe zwischen 15 bis 140 Fäden in Kett- und Schußrichtung verwendet.

8. Verfahren nach einem der voranstehenden Ansprüche, **dadurch gekennzeichnet, daß** man für den Auftrag der langnachleuchtenden Schichten (40) ein Gewebe von 9,5 bis 32 Fäden in Kett- und Schußrichtung verwendet.

9. Verfahren nach einem der voranstehenden Ansprüche, **dadurch gekennzeichnet, daß** man ein Zeitprofil verwendet, bei dem man zwischen 1 und 60 Minuten bei einer Temperatur zwischen 100° und 200°C härtet.

10. Verfahren nach einem der voranstehenden Ansprüche, **dadurch gekennzeichnet, daß** das Mischungsverhältnis von Bindemittel zu Pigment zwischen 1 : 0,5 und 1 : 2, vorzugsweise 1 : 1,2 und 1 : 1,5 beträgt.

11. Verfahren zur Herstellung von langnachleuchtenden Sicherheitsmarkierungen, Sicherheitsschildern, Sicherheitsleitsystemen, Sicherheitsstreifen und dergleichen, insbesondere für den Außeneinsatz, wobei man auf einen mit einer vorzugsweise weißen Reflexionsschicht beschichteten Träger mittels Siebdrucktechnik zunächst eine Schutzlackschicht und dann eine Mehrzahl von dünnen Schichten von wenigstens einer Sorte von in einem Einbrennlack in niedriger Konzentration gebundenen langnachleuchtenden Pigmenten aufträgt, (langnachleuchtende Schichten) und jede dieser Schichten mit einem vorgegebenen Temperatur-Zeit-Profil härtet, **dadurch gekennzeichnet, daß** man sowohl als Einbrennlack als auch als Schutzlack denselben Einbrennlack verwendet.

12. Verfahren nach Anspruch 10, **dadurch gekennzeichnet, daß** das Mischungsverhältnis von Einbrennlack zu Pigment wenigstens 2 : 1 beträgt.

13. Verfahren nach Anspruch 11 oder 12, **dadurch gekennzeichnet, daß** das Temperatur-Zeit-Profil zwischen 10 und 30 Minuten bei Temperaturen zwischen 140 bis 160°C beträgt.

14. Verfahren nach einem der voranstehenden Ansprüche, **dadurch gekennzeichnet, daß** der als Bindemittel verwendete Einbrennlack auch für die weiße Reflektionsschicht des Trägers (10) sowie für sämtliche Schutzlackschichten verwendet wird.

## Claims

1. A method of manufacturing enduringly luminescent safety markings, safety signs, safety guiding systems, safety guiding strips and the like with extremely high luminances, in particular for outside use, wherein at least one layer of at least one type of enduringly luminescent pigment bound in a binder (enduringly luminescent layer (40)) is applied by means of screen printing to a substrate (10) coated with a preferably white reflective layer, and this enduringly luminescent layer is sealed with at least one protective lacquer layer (50, 60), and wherein, before application of the protective lacquer layer (50, 60), the at least one enduringly luminescent layer is first hardened with a predetermined temperature-time profile and thereafter the protective lacquer layer (50, 60) is hardened with a further predetermined temperature-time profile, **characterised in that** the same stoving lacquer is used both as a binder and as a protective lacquer.

2. A method according to claim 1, **characterised in that** at least two enduringly luminescent layers (40) are applied and, after each application, hardened with a predetermined temperature-time profile, these enduringly luminescent layers (40) are covered with at least one protective lacquer layer (50, 60) and this protective lacquer layer (50, 60) is hardened with a predetermined temperature-time profile.

3. A method according to claim 1 or 2, **characterised in that** one contrasting coloured layer (20) is applied to the substrate (10) before the application of the enduringly luminescent layers (40), wherein at least one region to be printed by the at least one enduringly luminescent layer (40) is left blank, and **in that** the entire surface is then covered with at least one protective lacquer layer (30) which is hardened with a predetermined temperature-time profile.

4. A method according to claim 1 or 2, **characterised in that** an enduringly luminescent layer (40) is applied, hardened with a predetermined temperature-time profile, covered with a protective lacquer layer and this protective lacquer layer is hardened with a predetermined temperature-time profile, and **in that** a further enduringly luminescent layer is then applied, hardened with a predetermined temperature-time profile, covered with a protective lacquer layer and this protective lacquer layer is hardened with a predetermined temperature-time profile.

5. A method according to any one of the preceding claims, **characterised in that**, after all the layers have been applied, a protective lacquer layer (60) covering the entire surface is applied and this is hardened with a predetermined temperature-time profile.

6. A method according to claim 5, **characterised in that** the protective lacquer layer (60) contains glass beads.

7. A method according to any one of the preceding claims, **characterised in that** a screen with a fabric with a thread count of between 15 and 140 in the warp and weft directions is used to apply the protective lacquer layers (30, 50, 60).

8. A method according to any one of the preceding claims, **characterised in that** a fabric with a thread count of 9.5 to 32 in the warp and weft directions is used to apply the enduringly luminescent layers (40).

9. A method according to any one of the preceding claims, **characterised in that** a time profile is used in which hardening is carried out at a temperature between 100°C and 200°C for between 1 and 60 minutes.

10. A method according to any one of the preceding claims, **characterised in that** the mixing ratio of binder to pigment is between 1 : 0.5 and 1 : 2, preferably 1 : 1.2 and 1 : 1.5.

11. A method of manufacturing enduringly luminescent safety markings, safety signs, safety guiding systems, safety guiding strips and the like with extremely high luminances, in particular for outside use, wherein first at least one protective lacquer layer and then a plurality of thin layers of at least one type of enduringly luminescent pigment bound in a stoving lacquer in low concentration (enduringly luminescent layers) is applied by means of screen printing to a substrate coated with a preferably white reflective layer, and each of these layers is hardened with a predetermined temperature-time profile, **characterised in that** the same stoving lacquer is used both as a binder and as a protective lacquer.

12. A method according to claim 10, **characterised in that** the mixing ratio of stoving lacquer to pigment is at least 2 : 1.

13. A method according to claim 11 or 12, **characterised in that** the temperature-time profile is between 10 and 30 minutes at temperatures between 140°C and 160°C.

14. A method according to any one of the preceding claims, **characterised in that** the stoving lacquer used as a binder is also used for the white reflective layer of the substrate (10) and for all the protective lacquer layers.

## Revendications

1. Procédé de fabrication de marquages de sécurité, de panneaux de sécurité, de systèmes de guidage de sécurité, de bandes de guidage de sécurité et similaires présentant une luminescence de longue durée et une luminance très élevée, en particulier pour utilisation à l'extérieur, selon lequel on dépose par la technique de la sérigraphie sur un support (10) garni d'une couche réfléchissante de préférence blanche, au moins une couche d'au moins une sorte de pigments à luminescence de longue durée distribués dans un liant (couche à luminescence de longue durée (40)), et on bloque cette couche en la recouvrant d'une couche protectrice de vernis (50, 60) étant précisé qu'avant l'application de cette couche protectrice, d'abord la ou les couches à luminescence de longue durée est ou sont durcies par chauffage selon une courbe température-temps prédéterminée, puis la couche protectrice (50, 60) est elle-même durcie selon une autre courbe température-temps prédéterminée,
**caractérisé en ce qu'**
on utilise à la fois comme liant et comme vernis de protection le même vernis thermodurcissable.

2. Procédé selon la revendication 1,
**caractérisé en ce qu'**
on dépose au moins deux couches (40) à luminescence de longue durée que l'on durcit séparément après dépôt, selon une courbe température-temps prédéterminée, on recouvre ces couches (40) par au moins une couche protectrice de vernis (50, 60) que l'on durcit également selon une courbe température-temps prédéterminée.

3. Procédé selon l'une quelconque des revendications 1 ou 2,
**caractérisé en ce qu'**
avant le dépôt des couches (40) à luminescence de longue durée, on dépose sur le support (10) une couche colorée de contraste (20) en réservant dans celle-ci des zones pour accueillir la ou les couches (40), puis on recouvre toute la surface par au moins une couche protectrice de vernis (30) que l'on durcit selon une courbe température-temps prédéterminée.

4. Procédé selon l'une quelconque des revendications 1 ou 2,
**caractérisé en ce qu'**
on dépose une couche à luminescence de longue durée que l'on durcit selon une courbe température-temps prédéterminée, on la recouvre d'une couche protectrice de vernis que l'on durcit selon une courbe température-temps prédéterminée, puis on dispose une autre couche à luminescence de longue durée que l'on durcit selon une courbe température-temps prédéterminée et que l'on recouvre d'une couche protectrice de vernis que l'on durcit selon une courbe température-temps prédéterminée.

5. Procédé selon l'une quelconque des revendications précédentes,
**caractérisé en ce qu'**
après le dépôt de l'ensemble des couches, on recouvre toute leur surface par une couche protectrice de vernis (60) que l'on durcit selon une courbe température-temps prédéterminée.

6. Procédé selon la revendication 5,
**caractérisé en ce que**
la couche protectrice de vernis (60) contient des perles de verre.

7. Procédé selon l'une quelconque des revendications précédentes,
**caractérisé en ce que**
pour déposer les couches protectrices de vernis (30, 50, 60), on utilise un tamis fait d'un tissu comportant de 15 à 140 fils en chaîne et en trame.

8. Procédé selon l'une quelconque des revendications précédentes,
**caractérisé en ce que**
pour déposer les couches (40) à luminescence de longue durée, on utilise un tissu présentant de 9,5 à 32 fils en chaîne et en trame.

9. Procédé selon l'une quelconque des revendications précédentes,
**caractérisé en ce qu'**
on utilise une courbe température-temps selon laquelle on durcit pendant 1 à 60 minutes, à une température comprise entre 100 et 200°C.

10. Procédé selon l'une quelconque des revendications précédentes,
**caractérisé en ce que**
la proportion du liant par rapport au pigment dans le mélange est comprise entre 1 :0,5 et 1 :2, de préférence entre 1 :1,2 et 1 :1,5.

11. Procédé de fabrication de marquages de sécurité, de panneaux de sécurité, de systèmes de guidage de sécurité, de bandes de guidage de sécurité et similaires présentant une luminescence de longue durée et une luminance très élevée, en particulier pour utilisation à l'extérieur, selon lequel on dépose par la technique de la sérigraphie sur un support garni d'une couche réfléchissante de préférence blanche, tout d'abord une couche protectrice de vernis, puis un certain nombre de couches minces faites d'au moins une sorte de pigments à luminescence de longue durée répartis à assez faible concentration dans un vernis thermodurcissable (couches à luminescence de longue durée), chacune de ces couches étant durcie selon une courbe température-temps prédéterminée,
**caractérisé en ce qu'**
on utilise le vernis thermodurcissable également comme couche de protection de ce vernis lui-même.

12. Procédé selon la revendication 10,
**caractérisé en ce que**
la proportion du vernis thermodurcissable par rapport au pigment est d'au moins 2 :1.

13. Procédé selon l'une quelconque des revendications 11 ou 12,
**caractérisé en ce que**
la courbe température-temps de durcissement s'étend entre 10 et 30 minutes à des températures comprises entre 140 et 160°C.

14. Procédé selon l'une quelconque des revendications précédentes,
**caractérisé en ce que**
le vernis thermodurcissable est utilisé comme liant à la fois pour la couche blanche de réflexion du support (10) et pour l'ensemble des couches protectrices de vernis.
